# EUROPEAN PATENT APPLICATION

(11) **EP 1 481 578 A1**
(43) Date of publication of application: **01.12.2004**
(21) Application number: 04253030.3
(22) Date of filing: 22.05.2004
(51) Int. Cl.: A01B 13/08, E02F 5/10

(54) **Attachable ploughing element**

(30) Priority: 26.05.2003 NZ 52618103
(71) Applicant: Ramsay, Derek Laurence, Masterton (NZ)
(72) Inventor: Ramsay, Derek Laurence, Masterton (NZ)
(74) Representative: Bailey, Richard Alan

(57) **Abstract**

A plough attachment which can be pulled through the ground to form a narrow trench and at the same time, place therein an elongate element such as a conduit. The plough attachment (10) is an elongate body 11 having a leading end (21) and a trailing end (23). A ripper tip (12) is formed at or attached to the leading end. A mounting (14) is located adjacent the leading end (21). The mounting 14 is adapted for adapting the plough attachment (10) to an excavator. A gently curved feeder tube 19 is attached to the body (10) and has an inlet end (20) adjacent the leading end (21) and extends to an outlet end (22) adjacent the trailing end (23). The feeder tube (19) can be removable to facilitate changing with a feeder tube or greater or less internal diameter.

## Description

This invention relates to a plough attachment.

The laying of irrigation pipes, communication cables and the like into the ground can be labour intensive. Accordingly, where possible it is desirable that machinery intended for this purpose be employed. However, such machinery can expensive to operate.

In the farming industry it is common for a farmer to require irrigation pipe to be laid. However, this can be an expensive undertaking if the farmer requires the services of a contractor to carry out the operation or if the farmers' own equipment is not up to efficiently forming a trench for the laying of the irrigation pipes.

An object of the present invention is thus to provide a plough attachment which can be pulled through the ground to form a narrow trench and, at the same time, place therein an elongate element such as a conduit.

According to one broad aspect of the invention there is provided a plough attachment including an elongate member having a leading end and a trailing end, a ripper tip formed at or attached to the leading end, a mounting means located adjacent the leading end said mounting means being adapted for attaching the plough attachment to a machine and a feeder tube having an inlet end adjacent the leading end and extending toward the trailing end.

Preferably the feeder tube extends from the inlet end below the mounting means.

Preferably the elongate body is substantially triangular in shape and the ripper tip is located at a first apex of the triangular shape. Preferably at least one wing foot blade is located at or adjacent a second apex of the triangular shape which is at the trailing end of the body. The wing foot blade is preferably upwardly inclined from its leading end with respect to the direction of travel in use. Preferably a wing foot blade projects transversely from each side of the body.

In the preferred form of the invention the feeder tube is removable. Preferably the tube is longitudinally curved. In the preferred form the radius of curvature is gentle. Preferably the feeder tube is attached to an edge of the body said edge having the same or substantially the same curvature.

Preferably the mounting means provides a point of attachment for a head of an excavator arm or quick-hitch for an excavator arm, the inlet end (which is the leading end, in use) of the feeder tube being located below the point of attachment.

Preferably the leading end of the body has a leading edge, which is chamfered at least over part of the length thereof. The leading edge can also be of increased thickness for a distance toward the trailing end.

In the following more detailed description of the invention reference will be made to the accompanying drawings in which:-
Figure 1 is a perspective view of the plough attachment according to one form of the invention,
Figure 2 is a side elevation view,
Figure 3 is a top plan view,

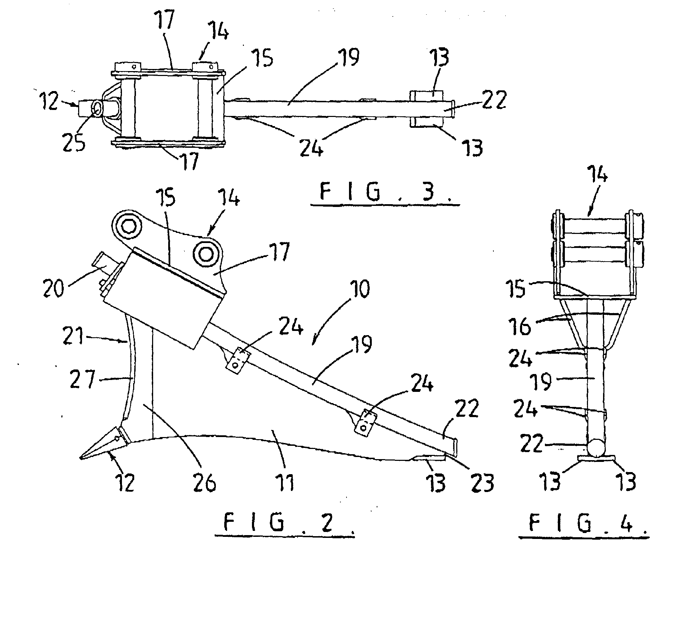

Figure 4 is an end view from the direction of arrow A in Figure 2, and
Figure 5 is a side elevation view of the plough attachment illustrating an in use situation.

The plough attachment according to the invention is based on a ripper 10 having an elongate body 11, which is preferably a long triangular shape. A ripper tip 12 is mounted at the apex which in use is at the lower leading edge of the generally elongate triangular shape. The ripper tip 12 can be in accordance with conventional construction suitable for the end purpose as will be known to those skilled in the art. Further description of the ripper tip 12 is therefore not considered necessary for the purposes of describing the present invention.

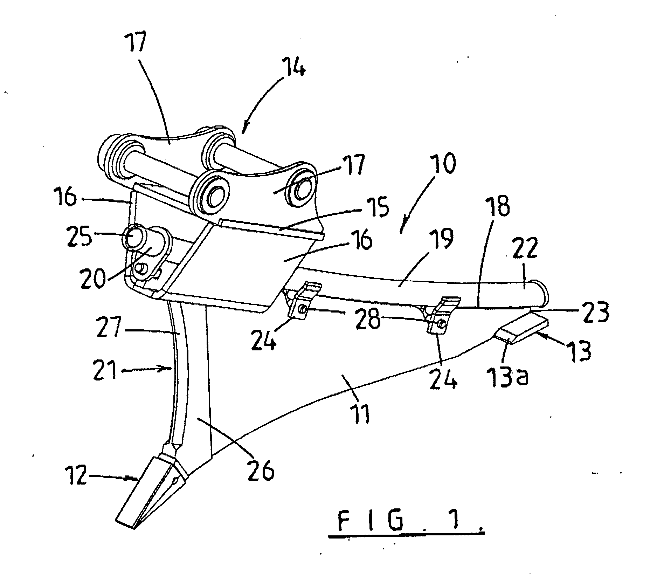

Toward the trailing end of the body 11, and located either side thereof, is a wing foot blade 13. Each wing foot blade 13 inclines rearwardly upwardly relative to the direction (in use) of forward movement of the ripper 10. These wing foot blades 13 are, as shown, of generally rectangular thin shape, though it is envisaged that other forms could be used. The leading edge 13a of the blade can be chamfered or present an upwardly and rearwardly inclined surface as shown in e.g. Figure 1.

The ripper body 11 is provided at the third apex (i.e. forward upper apex relative to the direction of travel) with a mounting attachment 14. This can be formed (as shown in the preferred illustrated form) by a mounting plate 15 which is connected and braced to the ripper body 11 by downwardly convergent plates 16. Projecting upwardly from the mounting plate 15 are conventional mountings 17 whereby the attachment 10 can be connected to an excavator or a quick hitch.

Extending along the upper edge 18 of the ripper body 11 is a feeder tube 19. This extends from a forward or leading end 20 (which projects beyond the leading edge 21 of the ripper body 11) to a trailing end 22 which terminates at or adjacent the trailing end 23 of the ripper body 11. The feeder tube 19 is removably fastened to the body 11 by way of a series of lugs 24 positioned either side of the body 11. Fasteners 28, which are preferably mounting bolts and nuts, fasten the lugs 74 to the body 11.

The leading edge 21 could simply be a flat edge of body 11. However, in the preferred form it is made with an increased cross sectional thickness by the thicken area 26. This area can be formed with a chamfered edge 27. This arrangement enhances the ability for the body 11 to cut through the ground.

As can be seen from the drawings the feeder tube 19 is longitudinally curved with a gentle radius. To this end a similar curvature is applied to the top edge 18 of the ripper body 11.

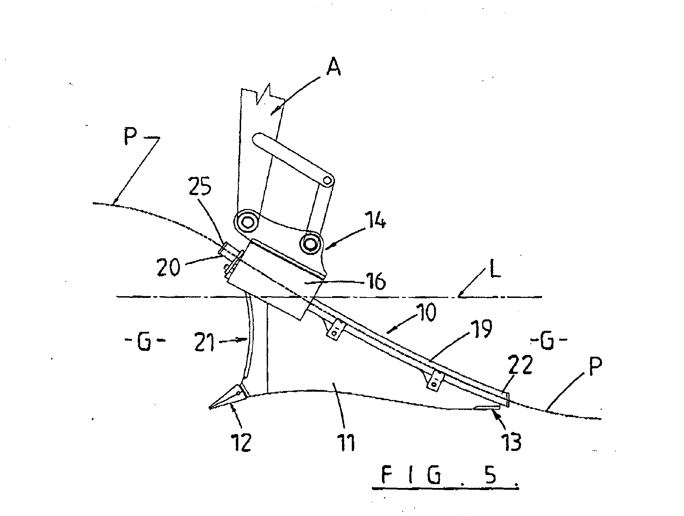

According to the preferred embodiment of the invention the plough attachment 10 is mounted directly to an excavator arm A (see Figure 5) or the excavator quick-hitch. The ripper plough 10 can thus be inserted into the ground G (ripper tip first) and pulled through the ground thereby cutting a narrow trench. Accompanying this action is movement of the conduit e.g. an irrigation pipe P (see Figure 5) through the feeder tube 19 thereby leaving behind the irrigation pipe in the narrow trench. The irrigation pipe enters the tube through outwardly flared inlet end 25 and issues out of the rear end 22 of the feeder tube 18 below ground level L.

Various sizes of feeder tube can be mounted to the ripper body 11 to suit different sized (diameter) irrigation pipes. The smaller the irrigation pipe, the smaller the internal diameter of the feeder tube 19 will be. It is intended that the feeder tube be of the minimum size required for the pipe to be fed therethrough as this keeps down the power required to pull the plough attachment through the ground and place the pipe therein.

The long triangular shape of the ripper body 11 appears to provide laying action stability and creates a good cavity for the pipe to lie in as it exits the feeder tube 19 into the bottom of the trench formed by the ripper. Additionally, the small wing foot blades 13 appear to assist in keeping the irrigation pipe at a constant depth once the ripper tip 12 is at the required plough depth.

An advantage of mounting the plough attachment with an excavator is that it provides extremely good control over contoured ground. This is achieved because the ripper can be tilted to follow the ground contours thereby maintaining a suitable depth for the irrigation pipe.

The gentle radius of the feeder tube 19 is also beneficial. This ensures that the irrigation pipe is correctly laid into the bottom of the trench formed by the ripper with the least amount of bending stress and drag on the pipe. This is in contrast to other known attachments which take the irrigation pipe through a tube behind the mounting attachment and thus usually through an abrupt bend. This can result in damage to the irrigation pipe as well as to increase the power requirements for pulling the attachment through the ground. With the present invention, however, the point of entry into the feeder tube 19 is as shown in the drawings, below the point of attachment of the head of the excavator arm (see in particular, Figure 5).

With the plough attachment of the form shown in the accompanying drawings a 15 tonne excavator provides sufficient power. However, it is envisaged that the plough attachment of appropriate scale can be used for excavators of any size. It is envisaged, however, that irrespective of the size of the ripper body the same feeder tube design and radius will be used for the various sized excavators so that feeder tubes are interchangeable.

With a prototype version of the plough attachment, when attached to a 15 tonne excavator, an average time to pull a 25mm diameter irrigation pipe over a length of 250 metres is approximately five minutes. If, however, ground conditions are particularly hard a single point ripper attachment can be pulled through initially so as to loosen hard material without the extra drag of the feeder tube and ripper plough body. Alternatively a larger excavator with more power can be used to form a trench and pull the pipe in one pass.

The present invention thus provides a plough attachment which is effective and efficient in use. Provided the ground conditions are favourable and/or the pulling of vehicle is of sufficient power rating a narrow trench can be cut into the ground and simultaneously an irrigation pipe can be fed into the trench. The plough attachment is versatile in that it can handle different sized pipes by simply selecting and bolting on the desired size of feeder tube.

While the foregoing has principally referred to the plough attachment as being used to lay plastic irrigation pipe or pipes in general the plough attachment is not restricted to such end uses. For example, it can be used to lay a communication cable or other forms of conduits.

## Claims

1. A plough attachment including an elongate member having a leading end and a trailing end, a ripper tip formed at or attached to the leading end, a mounting means located adjacent the leading end, said mounting means being adapted for attaching the plough attachment to a machine and a feeder tube tube having an inlet end adjacent the leading end and extending toward to trailing end.

2. A plough attachment as claimed in claim 1 wherein the feeder tube extends from the inlet end below the mounting means.

3. A plough attachment as claimed in claim 1 wherein the mounting means provides a point of attachment for a head of an excavator arm or quick-hitch for an excavator arm, the inlet end (which is the leading end, in use, of the feeder tube) being located below the point of attachment.

4. A plough attachment as claimed in any one of the preceding claims further including at least one wing foot blade located at or adjacent the trailing end.

5. A plough attachment as claimed in claim 4 wherein the wing foot blade is preferably upwardly inclined from its leading end with respect to the direction of travel in use.

6. A plough attachment as claimed in claim 4 or 5 wherein a wing foot blade projects transversely from each side of the body.

7. A plough attachment as claimed in any one of claims 4 to 6 wherein the elongate body is substantially triangular in shape and the ripper tip is located at a first apex of the triangular shape.

8. A plough attachment as claimed in claim 7 wherein said at least one wing foot blade is located at or adjacent a second apex of the triangular shape, which is at the trailing end of the body.

9. A plough attachment as claimed in any one of the preceding claims wherein the feeder tube is removable.

10. A plough attachment as claimed in claim 9 wherein the feeder tube is longitudinally curved.

11. A plough attachment as claimed in claim 10 wherein the radius of curvature is gentle.

12. A plough attachment as claimed in claim 10 or 11 wherein the feeder tube is attached to an edge of the body, said edge having the same or substantially the same curvature as the feeder tube.

13. A plough attachment as claimed in any one of the preceding claims wherein the leading end of the body has a leading edge, which is chamfered at least over part of the length thereof.

14. A plough attachment as claimed in claim 13 wherein the leading edge can also be of increased thickness for a distance toward the trailing end.

15. A plough attachment as claimed in any one of the preceding claims wherein the outlet end of the feeder tube is located or adjacent the trailing end of the body.

16. A plough attachment as claimed in claim 15 wherein the outlet end of the feeder tube is located beyond the trailing end.

17. A plough attachment as claimed in any one of the preceding claims wherein the mounting means includes a plate which is connected and braced to the body by downwardly convergent plates and projecting upwardly from said plate is a pair of mountings whereby the plough attachment can be connected to an excavator or a quick-hitch.

18. A plough attachment as claimed in claim 17 wherein the leading end of the feeder tube is located within the plate and downwardly convergent plates with the inlet end of the feeder tube projecting beyond the leading end of the body.

19. A plough attachment as claimed in any one of the preceding claims wherein the inlet end of the feeder tube is outwardly flared.
